# EUROPEAN PATENT APPLICATION

(11) **EP 4 730 681 A1**
(43) Date of publication of application: **22.04.2026**
(21) Application number: 25209158.2
(22) Date of filing: 16.10.2025
(51) Int. Cl.: H04L 1/1607, H04L 1/1829, H04L 1/1867

(54) **WIRELESS COMMUNICATION DEVICE AND METHOD FOR SUPPORTING BLOCK ACKNOWLEDGEMENT MECHANISM**

(30) Priority: 21.10.2024 US 202418922112
(71) Applicant: TP-Link Systems Inc., Irvine, California 92618 (US)
(72) Inventor: SHI, Shuyu, Shanghai, 201799 (CN); NIU, Xuefeng, Shenzhen, 518000 (CN); SUN, Da, Shenzhen, 518000 (CN)
(74) Representative: Marks & Clerk LLP

(57) **Abstract**

The present disclosure provides a wireless communication device, method, system and computer program product for supporting block acknowledgement (BA) mechanism. The wireless communication device includes: one or more processors; a memory coupled to at least one of the processors; and a set of computer program instructions stored in the memory, which, when executed by at least one of the processors, perform actions of: receiving, from a peer wireless communication device, a Low Latency (LL) frame indication for one or more LL frames of a plurality of data frames to be communicated between the wireless communication device and the peer wireless communication device in a BA session; and transmitting, in response to determining a missing LL frame of the one or more LL frames based on the LL frame indication, a retransmission request frame to the peer wireless communication device including an indication of the missing LL frame.

## Description

### CROSS REFERENCE TO RELATED APPLICATIONS

This application claims the benefit of U.S. Non-Provisional Patent Application No. 18/922,112, filed on October 21, 2024 and titled "WIRELESS COMMUNICATION DEVICE AND METHOD FOR SUPPORTING BLOCK ACKNOWLEDGEMENT MECHANISM". The entire disclosure of the aforementioned application is incorporated by reference as part of the disclosure of this application.

### TECHNICAL FIELD

The present disclosure relates to wireless communication, and more specifically, to a wireless communication device, method, system and computer program product for supporting block acknowledgement (BA) mechanism.

### BACKGROUND

In the context of Wi-Fi communication, an acknowledgement (ACK) procedure has been proposed to ensure the integrity and reliability of data transmission. Upon successful reception of a data frame from a transmitting device (e.g., an originator device), the receiving device (e.g., a recipient device) sends an ACK frame back to the transmitting device for acknowledging the data frame received. Otherwise, a negative acknowledgment (NACK) will be transmitted, which allows for retransmission of the lost frames.

Block acknowledgement (BA) mechanism was introduced in the 802.11e amendment to improve efficiency by allowing for the transfer of a block of data frames that are acknowledged with a single BA frame instead of an ACK frame for each of the individual data frames. However, there is still a need for enhancements on the BA mechanism.

### SUMMARY

In view of the above problems, the present disclosure provides a wireless communication device, method, system and computer program product for supporting block acknowledgement (BA) mechanism.

According to one embodiment of the present disclosure, there is provided a wireless communication device, comprising: one or more processors; a memory coupled to at least one of the processors; and a set of computer program instructions stored in the memory, which, when executed by at least one of the processors, perform actions of: receiving, from a peer wireless communication device, a Low Latency (LL) frame indication for one or more LL frames of a plurality of data frames to be communicated between the wireless communication device and the peer wireless communication device in a BA session; and transmitting, in response to determining a missing LL frame of the one or more LL frames based on the LL frame indication, a retransmission request frame to the peer wireless communication device including an indication of the missing LL frame.

According to another embodiment of the present disclosure, there is provided a method for wireless communication, the method implemented in a wireless communication device and comprising: receiving, from a peer wireless communication device, a LL frame indication for one or more LL frames of a plurality of data frames to be communicated between the wireless communication device and the peer wireless communication device in a BA session; and transmitting, in response to determining a missing LL frame of the one or more LL frames based on the LL frame indication, a retransmission request frame to the peer wireless communication device including an indication of the missing LL frame.

According to yet another embodiment of the present disclosure, there is provided a computer program product for wireless communication, the computer program product comprising a non-transitory computer readable storage medium having program instructions embodied therewith, the program instructions executable by a processor of a wireless communication device to cause the processor to: receive, from a peer wireless communication device, a LL frame indication for one or more LL frames of a plurality of data frames to be communicated between the wireless communication device and the peer wireless communication device in a BA session; and transmit, in response to determining a missing LL frame of the one or more LL frames based on the LL frame indication, a retransmission request frame to the peer wireless communication device including an indication of the missing LL frame.

According to still another embodiment of the present disclosure, there is provided a wireless communication system comprising at least a wireless communication device and a peer wireless communication device. The wireless communication device may be configured to perform actions of: receiving, from a peer wireless communication device, a LL frame indication for one or more LL frames of a plurality of data frames to be communicated between the wireless communication device and the peer wireless communication device in a BA session; and transmitting, in response to determining a missing LL frame of the one or more LL frames based on the LL frame indication, a retransmission request frame to the peer wireless communication device including an indication of the missing LL frame. Accordingly, the peer wireless communication device may be configured to perform actions of: transmitting, to the wireless communication device, the LL frame indication for the one or more LL frames; and receiving, from the wireless communication device, the retransmission request frame including the indication of the missing LL frame.

At least based on the above embodiments of the present disclosure, an enhanced BA mechanism for data transmissions between the wireless communication devices can be realized while addressing the latency related issues in conventional BA mechanisms.

### BRIEF DESCRIPTION OF THE DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
Fig. 1 shows an exemplary network topology for data transmission between wireless communication devices according to an embodiment of the present disclosure.
Fig. 2 shows an exemplary schematic diagram illustrating the message sequence for interactions between wireless communication devices in the Immediate BA mechanism.
Fig. 3 shows an exemplary schematic diagram illustrating a head-of-line (HOL) blocking issue in the existing Immediate BA mechanism.
Fig. 4 shows an exemplary schematic diagram illustrating an enhanced immediate BA mechanism according to an embodiment of the present disclosure.
Fig. 5 shows an exemplary schematic diagram illustrating several bitmaps in the enhanced immediate BA mechanism according to an embodiment of the present disclosure.
Fig. 6 shows an exemplary schematic diagram illustrating the message sequence for interactions between wireless communication devices in the Delayed BA mechanism.
Fig. 7 shows an exemplary schematic diagram illustrating an enhanced delayed BA mechanism according to an embodiment of the present disclosure.
Fig. 8 shows an exemplary schematic diagram illustrating an A-MPDU used in the enhanced BA mechanism according to an embodiment of the present disclosure.
Fig. 9 shows an exemplary schematic diagram illustrating a pair of MLD devices supporting the BA mechanism according to an embodiment of the present disclosure.
Fig. 10 shows an exemplary schematic diagram illustrating Power-Save Multi-Poll (PSMP) sequence in BA mechanism according to an embodiment of the present disclosure.
Fig. 11 shows a flowchart of a computer-implemented method of wireless communication according to an embodiment of the present disclosure.
Fig. 12 is an exemplary block diagram illustrating a computing device according to embodiments of the disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that orientations or positional relationships indicated by terms such as "center", "upper", "lower", "left", "right", "vertical", "horizontal", "inside" and "outside" are based on orientations or positional relationships shown in the drawings, only for the convenience of describing the present disclosure and simplifying the description, instead of indicating or implying the indicated device or element must have a particular orientation. In addition, terms such as "first", "second" and "third" are only for descriptive purposes, and cannot be understood as indicating or implying relative importance. Likewise, words like "a", "an" or "the" do not represent a quantity limit, but represent an existence of at least one. Words like "include" or "comprise" mean that an element or an object in front of the said word encompasses those ones listed following the said word and their equivalents, without excluding other elements or objects. Words like "connect" or "link" are not limited to physical or mechanical connections, but may include electrical connections, whether direct or indirect.

In the description of the present disclosure, it should be noted that, unless otherwise explicitly specified and limited, terms such as "mount", "link" and "connect" should be understood in a broad sense. For example, such terms may refer to being fixedly connected, or detachably connected, or integrally connected; may refer to being mechanically connected, or electrically connected; may refer to being directly connected, or indirectly connected via an intermediate medium, or internally connected inside two elements. For ordinary skilled in the art, the meanings of the above terms in the present disclosure may be understood on a case-by-case basis.

In addition, technical features involved in different embodiments of the present disclosure described below may be combined with each other as long as no conflicts occurs therebetween.

In the present disclosure, an AP, which may be interchangeably referred to as a wireless access point (WAP), is a communication device that can communicate with a non-AP (e.g., a station (STA) or client device) in a WLAN and that allows the non-AP to connect to a wired network. The AP usually connects to a router (via a wired network) as a standalone device, but it can also be integrated with or employed in the router. Likewise, in the present disclosure, a non-AP (e.g., a client device or station, which is interchangeably referred to as a STA) is a communication device that can communicate with an AP to obtain various communication services such as voice, video, packet data, messaging, broadcast, etc. The STA can be any device that contains an IEEE 820.11-conformant media access control (MAC) and physical layer (PHY) interface to the wireless medium (WM). For example, a STA may be a laptop, a desktop personal computer (PC), a personal digital assistant (PDA), an access point or a Wi-Fi phone in a WLAN environment. The STA may be fixed or mobile. In the WLAN environment, the terms "STA", "client device", "wireless client", "user" and "user device" are often used interchangeably.

In the present disclosure, a STA in a WLAN may work as an AP at a different occasion, and vice versa. This is because communication devices in the context of IEEE 820.11 (Wi-Fi) technologies may include both STA hardware components and AP hardware components. In this manner, the communication devices may switch between a STA mode and an AP mode, based on actual WLAN conditions and/or requirements. In various embodiments below, a non-AP STA may refer to a STA in a WLAN that is not implemented as an AP.

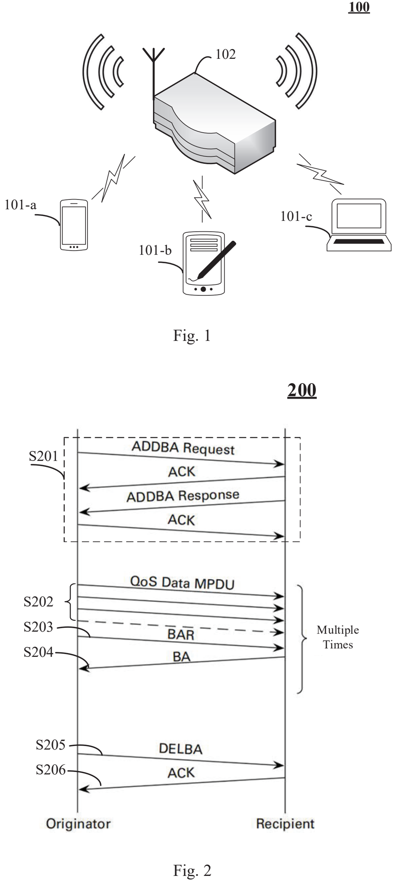

Fig. 1 shows an exemplary network topology for data transmission between wireless communication devices according to an embodiment of the present disclosure.

As shown in Fig. 1, the exemplary network topology 100 is depicted, which includes three client devices 101-a, 101-b, and 101-c (collectively referred to as a client device 101) connected to an access point (AP) 102, and can be employed in 802.11 WLAN networks. Examples of the client devices 101 may include, for example, smartphones, tablets, computers, and other internet-capable devices. As previously discussed, the AP 102 is capable of establishing WLAN communication with the client devices 101, enabling the client devices to connect to a wired network. This permits the client devices to access a variety of communication services from the Internet, including voice, video, packet data, messaging, and broadcast, among others. After the client devices 101 successfully associates with the AP 102 through the 802.11 association procedure, data transfer between the client devices 101 and the AP 102 can commence. This allows the client devices 101 to transmit and receive data packets to and from the network through the AP 102.

The architecture presented in Fig. 1 is only illustrative and does not impose any limitations on any embodiment of the present disclosure. Multiple APs in the WLAN network can serve specific sets of associated client devices, and depending on application requirements and overall network constraints, the number of client devices in each serving set can be greater or less than the three client devices as depicted.

As mentioned above, BA mechanism is proposed in 802.11 Standards to facilitate data communications in WLAN networks. Two approaches of BA were originally defined in the 802.11e Amendment: Immediate BA and Delayed BA. Furthermore, both BA approaches are enhanced in the 802.11n Amendment to improve efficiency and take advantage of aggregation and the higher data rates, and the enhanced mechanisms of BA are referred to as high-throughput (HT)-immediate BA and HT-delayed BA. However, the existing BA mechanisms still require further improvements, as described hereinafter.

Fig. 2 shows an exemplary schematic diagram illustrating the message sequence for interactions between wireless communication devices in the Immediate BA mechanism.

As shown in Fig. 2, the wireless communication device with data frames to send is referred to as originator, transmitter, or transmitting device, while another wireless communication device serving as a receiver of the data frames is referred to as recipient, receiver, or receiving device. For example, in conjunction with the topology 100 shown in Fig. 1, when there is a downlink data transmission from the AP 102 to the client device 101, the AP is the originator and the client device is the recipient; conversely, when there is an uplink data transmission from the client device 101 to the AP 102, the client device is the originator and the AP is the recipient. During data communication between the two wireless communication devices, the Immediate BA mechanism can be implemented, which is described hereinafter in combination with the message sequence 200 of Fig. 2.

At a first stage for BA session initiation (i.e., setup stage), as shown in step S201 of Fig. 2, the BA mechanism needs to be enabled by establishing a BA session through the exchange of ADDBA Request and Response, as well as their responding ACKs. The BA session is established between two wireless communication devices for a particular traffic identifier (TID) and for data transfer in one direction, i.e., from originator to recipient.

At a second stage for BA session data transfer (i.e., data and acknowledgment transfer stage), as shown in steps S202-S204 of Fig. 2, the data transfer is started subsequent to a successful ADDBA exchange. The originator will send a block of data (e.g., Quality of Service (QoS) Data MPDUs) in step S202 followed by a BAR in step S203, to which the recipient will respond with a BA in step S204. The BA in step S204 acknowledges correctly received data frames from the block of data frames sent in step S202. The originator requeues data frames which were not correctly received and may re-transmit them in the subsequent block of data frames (not shown). In addition, the above steps S202-S204 may be performed many times if there is continuous data transmission from the originator to the recipient, which means several rounds or several blocks of data frames can be communicated.

At a third stage for BA session tear down (i.e., tear down stage), as shown in steps S205-S206 of Fig. 2, the originator or recipient may tear down the BA session by sending a DELBA Request in step S205 which, if correctly received, is acknowledged with an ACK in step S206 as a response.

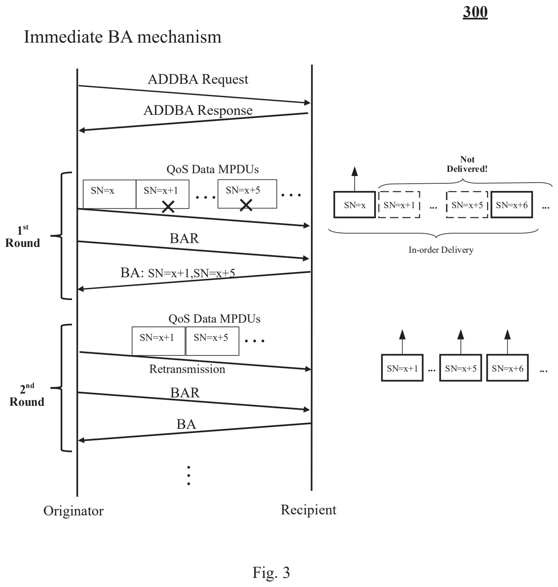

Fig. 3 shows an exemplary schematic diagram illustrating a head-of-line (HOL) blocking issue in the existing Immediate BA mechanism.

For the existing Immediate BA mechanism, for example, during the BA session data transfer stage, MSDUs (e.g., those decoded and decapsulated from the received MPDUs) received at a current layer (such as the MAC layer) of the recipient are transferred to an upper layer (such as LLC layer) of the recipient, using in-order delivery approach, which means that once an MPDU is received, two following operations are required at the recipient.

The first operation is to record that the MPDU is received successfully in a scoreboard, which maintains a record to track which MPDUs have been received correctly.

The second operation is to buffer the MPDU in a reorder buffer. Furthermore, based on whether there is an incomplete preceding MSDU forming a hole, the recipient will determine whether to deliver the MPDU to an upper layer, such as LLC layer, or keep the MPDU in the reorder buffer. If there is no incomplete preceding MSDU, the MPDU will be decapsulated to MSDU and then delivered to the upper layer. However, if there is an incomplete preceding MSDU forming a hole, the MPDU will be kept in the reorder buffer at the MAC layer without transferring to the upper layer (such as LLC layer).

In order to provide feedback on whether the data frames are correctly received or not, the recipient may leverage the BA bitmap in the BA frame (such as in step S204 of Fig. 2) to feedback whether the MPDUs are received during the established BA session. According to such feedback approach, the received MPDUs, even with an incomplete preceding MSDU(s) forming a hole(s), will be fed back to the originator with a result that they are received successfully and therefore no retransmission is required for these received MPDUs. However, these MPDUs will not be delivered to the upper layer due to the in-order delivery restriction of current Wi-Fi MAC requirements, since there is a preceding "hole". This is also referred to as the head-of-line (HOL) blocking issue in the existing BA mechanism. The HOL blocking issue will be described in combination with the message sequence 300 of Fig. 3.

As shown in Fig. 3, the BA session may be established between the originator and the recipient through the exchange of ADDBA request and response frames. After that, the originator may start transmitting a block of data frames (such as QoS Data MPDUs), which is labeled as the data frame with sequence numbers (SNs) of SN=x, SN=x+1, ..., and so on.

In the descriptions below in combination with Fig. 3, the following situation is taken as an example. During the first round or first block of QoS Data MPDUs, the data frames SN=x, x+2, x+3, x+4, x+6, ..., are successfully received, but data frames SN=x+1 and SN=x+5 are not, such that retransmission of the lost data frames SN=x+1 and SN=x+5 are needed. Later, the retransmission of the lost data frames SN=x+1 and SN=x+5 can be transmitted together with other data frames (not shown) in the second round or second block of QoS Data MPDUs.

According to the existing BA protocol, the originator sequentially transmits a series of Media Access Control (MAC) Protocol Data Units (MPDUs) based on their assigned sequence numbers. Upon successful reception of an MPDU, the recipient decodes or equivalently decapsulates the received MPDU as MAC Service Data Unit (MSDU), and then delivers the decoded MSDU to the Logical Link Control (LLC) layer according to an in-order delivery approach. However, this conventional BA approach may cause a head-of-line (HOL) blocking issue when a preceding MPDU in the reorder buffer is missing and thus forms a hole. In such cases, even if subsequent MPDUs are correctly received, they are unable to be delivered to the upper layer and just stay and get stuck in the reorder buffer. This results in a delay, as the entire process of data frame transmission is impeded by the missing MPDU forming a hole, thereby leading to the overall latency in communication.

For example, as shown in Fig.3, data frames labeled SN=x has been successfully received and, conforming to the in-order delivery requirements, has been delivered to the LLC layer. However, data frame SN=x+1 is not successfully received. As a result, all the data frames after SN=x+1 (even for the data frames SN=x+2, x+3, x+4, x+6 which are subsequently received correctly) still remain in the reorder buffer owing to the "hole" created by the missing data frame SN=x+1 and due to the in-order delivery restrictions, thus preventing its delivery to the upper layer. That is, if data frame SN=x+1 is not successfully received, all the following data frames SN=x+2, ..., will be "blocked" due to the hole.

After the block of data frames are transmitted, the BA frame will be transmitted by the recipient in response to the BAR to report the unsuccessful reception of data frame SN=x+1 and SN=x+5, allowing for its retransmission. As shown in Fig. 3, the retransmission of data frame SN=x+5 is performed by the originator after the BA frame is obtained by the originator, which is retransmitted during the second round or second block of QoS data MPDUs. Until the recipient successfully receives the data frames SN=x+1, SN=x+5 (at this time, the hole previously caused by SN=x+1 is resolved), the data frames SN=x+1, SN=x+2, SN=x+3, ..., can then be delivered to the LLC layer in accordance with the in-order delivery mechanism.

Although the above description introduces the HOL blocking issue with reference to the Immediate BA mechanism, inventors recognize that at least the following issues exist in the existing BA mechanisms, including but not limited to the immediate BA mechanism, the delayed BA mechanism, the HT-immediate BA mechanism, and the HT-delayed BA mechanism, especially for low latency (LL) requirement. The head-of-line (HOL) issue causes a gap between the timings of receiving the MPDUs and transferring these MPDUs to the LLC layer in the format of MSDUs, so the delivery of MSDUs according to the in-order delivery approach is not performed in a timely manner. In addition, these incomplete MSDUs forming holes in the reorder buffer can only be retransmitted after the BA frame is received by the originator, which may not meet the LL requirement of high priority frames.

There have been discussions to address the issues, such as IEEE 802.11-23/1207r0, and IEEE 802.11-23/697r0. For example, IEEE 802.11-23/1207r0 proposes using Multi-link operation (MLO) mechanism to transmit the feedback of the missing MPDU, but it is not applicable to devices not supporting MLO functionality. IEEE 802.11-23/697r0 proposes an out-of-order delivery strategy, and uses a PN window bitmap for duplicate detection of the received MSDUs. However, a challenge with this approach is the delay in the originator's awareness of the incorrect reception of the preceding missing MPDU forming the hole, which is only ascertained after the receipt of the Block Acknowledgment (BA) frame from the recipient (as described above in combination with Fig. 3). This delay hinders the immediate identification of data frames not received for the current BA session, including the preceding missing MPDU. Furthermore, if the preceding missing MPDU is designated as low latency (LL) frame (and potentially, other missing data frames subsequent to the preceding missing MPDU in this BA session are also LL frames), the existing BA mechanism fails to provide timely feedback on such critical information related to whether LL frames are received.

At least in view of at least the above problem, the overall concept of the present disclosure is to provide an enhancement for current Block Ack mechanisms, which allows for prompt feedback on missing LL frames and thus allows for prompt retransmission of the missing LL frames. Additionally, the present disclosure also proposes enhancements for current Block Ack mechanisms by using the out-of-order delivery approach to address the HOL issue. In this way, the BA mechanisms can be improved which provide solutions for both the HOL issue and the requirement of prompt retransmission of LL frames.

According to embodiments of the present disclosure, in order to facilitate the data transmission between a wireless communication device (e.g., the "recipient" herein) and its peer wireless communication device (e.g., the "originator" herein in the present disclosure), the enhanced BA mechanism requires that a Low Latency (LL) frame indication for one or more LL frames of a plurality of data frames to be transmitted during the BA session should be provided. For example, after the setup of the BA session using ADDBA request/response exchange, the peer wireless communication device may additionally transmits the LL frame indication for the one or more LL frames of the plurality of data frames, for example, in a LL status notification frame, which is described hereinafter. It should be noted that other control or data frames can also be used for carrying the LL frame indication, which is not limited in the present disclosure. Accordingly, during the data transfer stage (for example, there may be serval rounds or blocks of data transfer each involving the transmission of a plurality of data frames including one or more LL frames), the wireless communication device may determine whether there is any missing LL frame(s) among the one or more LL frames based on the LL frame indication signaled for that round of data transfer, and as a result of determination that there is a missing LL frame, the device timely transmits a retransmission request frame to the peer wireless communication device including an indication of the missing LL frame, which allows for prompt retransmission thereof.

According to further embodiments of the present disclosure, during the data transfer stage for the plurality of data frames, the wireless communication device may perform out-of-order delivery for one or more received data frames of the plurality of data frames from a current layer of the wireless communication device to an upper layer of the wireless communication device, which further effectively avoid the HOL blocking issue.

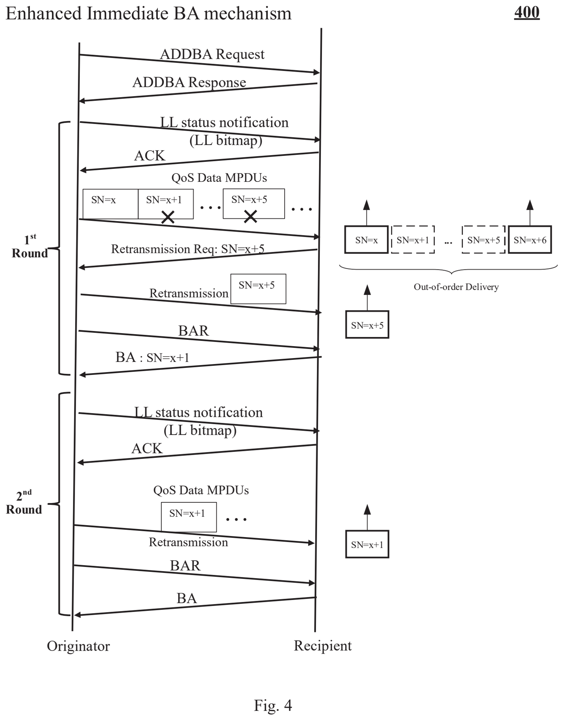

Fig. 4 shows an exemplary schematic diagram illustrating an enhanced immediate BA mechanism according to an embodiment of the present disclosure.

In this embodiment, the overall frame exchange procedure 400 of BA mechanism in Fig. 4 is basically the same as Fig. 3, and details for the same operations are omitted here. The distinctions between Fig. 3 and Fig. 4 lie in that a LL frame indication (e.g., LL bitmap) is provided in a LL status notification frame, and that an out-of-order approach is used during the data transfer stage based on the use of the PN window bitmap. In this way, on one hand, the feedback on whether a LL frame is successfully received can be timely provided to the originator prior to the transmission of the BA frame, which allows for prompt retransmission of missing LL frame. On the other hand, the data frames successfully received at the recipient can be efficiently delivered to upper layer in an out-of-order approach, without being "blocked" due to a preceding missing data frame forming a hole.

As shown in Fig. 4, during the setup stage for the BA session, the ADDBA request frame and ADDBA response frame may be transmitted, and the ACK information in response to the ADDBA Request/Response frames are omitted for simplicity. For example, the number of frame buffers the responder has available for reordering frames is defined by the Buffer Size field within the ADDBA Request/Response exchange. In addition, the ADDBA request and ADDBA response may contain a field indicating support of enhanced mode for BA, e.g., the enhanced mode for BA to satisfy LL requirements as described in the present disclosure, such that the communication parties may be aware that the enhanced mode for BA will be used for the later data transmission between them, which will be described hereinafter.

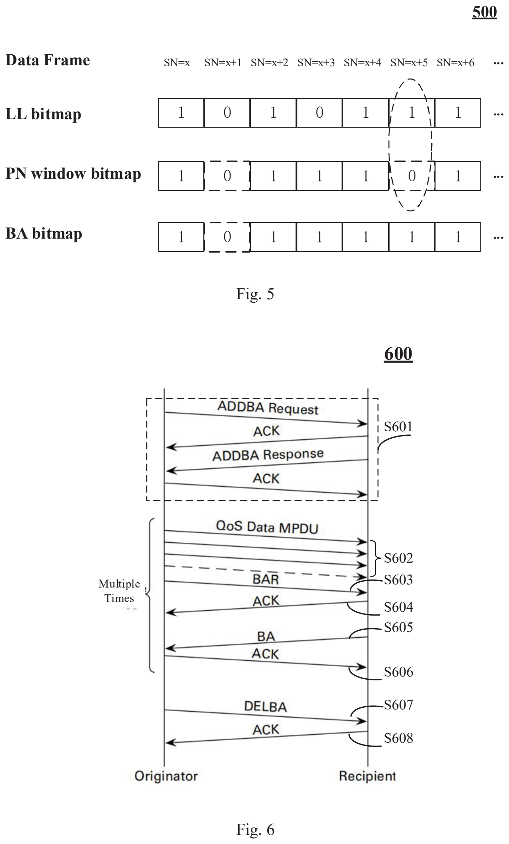

The present disclosure further proposes the incorporation of a LL status notification frame (e.g., including LL bitmap), which delineates the classification of data frames (e.g., MPDUs) to be transmitted in the BA process as either Low Latency (LL) frame or non-LL frame. In response to the LL status notification frame, the recipient may send an ACK frame indicating the successful reception of the LL status notification frame. Thereafter, during the data transfer stage for the data frames (such as QoS Data MPDUs), once a MPDU is received, the following steps will be involved.
1) The recipient decapsulates the received MPDU to MSDU, and transfers the MSDU to LLC layer immediately, also marks the successful receipt/delivery of the MSDU. For example, the marking is done by labeling the corresponding bit in the PN window bitmap to 1, indicating that the MSDU has been delivered to LLC, as described in Fig. 5.
2) The recipient checks whether there is 0(s) in preceding bits of the PN window bitmap, if any, it means there is MSDU(s)/MPDU(s) with a smaller SN is not received.
3) If Step 2) is true, the recipient further checks these bits of the LL bitmap index of which are identical with these bits in the PN window bitmap. If there is any 1(s), it means that there is LL MSDU(s)/MPDU(s) with a smaller SN is not received.
4) If Step 3) is true, the recipient sends a prompt retransmission request to the originator (which includes an indication, e.g., an index, of the LL MSDU(s)/MPDU(s) not received), and the originator retransmits the MPDUs in response to the prompt retransmission request and well before the receipt of feedback of BA frame in the existing BA mechanism.

After the data transfer for the block of data frames is finished, a BA frame can be transmitted from the recipient to the originator for indicating whether each of the plurality of data frames is successfully received for this round of data frame transmission.

In the descriptions below in combination with Fig. 4, the following situation is taken as an example. During the first round or first block of QoS Data MPDUs, the data frames SN=x, x+2, x+3, x+4, x+6, ..., are successfully received, but data frames SN=x+1 and SN=x+5 are not. In addition, according to the LL frame indication, data frames SN=x, x+2, x+4, x+5 and x+6 are LL frames, while data frames SN=x+1 and SN=x+3 are non-LL frames. In the present disclosure, the lost LL frame SN=x+5 is promptly requested for retransmission during the first round of QoS Data MPDUs, while the lost LL frame SN=x+1 is retransmitted together with other data frames (not shown) during the second round of QoS Data MPDUs.

For example, as shown in Fig. 4, data frame SN=x is successfully received and has been delivered to the LLC layer. Later, data frame SN=x+2 is also received and delivered to the LLC layer using the out-of-order delivery mechanism, but it is found that the previous data frame SN=x+1 is not received. Since data frame SN=x+1 is not a LL frame, the unsuccessful reception of SN=x+1 can be later fed back in the BA frame. At a later time, data frames SN=x+3 and SN=x+4 are also received and delivered to the LLC layer using the out-of-order delivery mechanism. Then, data frame SN=x+6 is also received and delivered to the LLC layer using the out-of-order delivery mechanism, but it is found that the previous data frame SN=x+5 is not received, it is implicitly determined that data frame SN=x+5 is lost due to the knowledge that the data frames SN=x+4 and SN=x+6 are both received. Since data frame SN=x+5 is a LL frame, the unsuccessful reception of SN=x+1 should be fed back in a timely manner.

In contrast to conventional approaches where the data frame SN=x+2, SN=x+3, ..., will be "blocked" due to the hole formed by at least data frame SN=x+1, the present disclosure proposes that the received data frames are delivered to LLC in the out-of-order approach, which means that even if data frame SN=x+1 is lost, all the following received data frames (i.e., MPDUs), such as data frame SN=x+2, SN=x+3, SN=x+4, and SN=x+6 will be transferred to the LLC layer. In addition, if the corresponding bit in index 5 of LL bitmap is 1, it can be determined that the missing frame SN=x+5 is a LL frame, and thus the retransmission for the missing LL frame SN=x+5 is requested promptly, without having to wait for indicating the unsuccessful receipt of the missing LL frame in the BA frame too late.

It should be noted that, since the corresponding bit in index 1 of LL bitmap is 0, it can be determined that the missing frame SN=x+1 is not a LL frame, and thus the retransmission for the missing non-LL frame SN=x+1 does not need to be requested promptly, instead, the retransmission of missing non-LL frame SN=x+1 can be performed after the BA frame (e.g., after the interaction of BAR and BA frames, as shown in Fig. 4) during the second round or second block of QoS data MPDUs together with other data frames (not shown).

After receiving the retransmission of the non-LL frame SN=x+1, it can also be delivered to the LLC layer, similar to the above.

It should be noted that, before the data transmission for the next round of data packets (e.g., for next block of transmission of a plurality of QoS Data MPDUs similar to the above), another LL status notification can be provided from the originator to the recipient for indicating one or more LL frames among a plurality of data frames to be transmitted in this round of data transmission. Accordingly, for each round of BA sessions, the recipient may check whether there is any missing LL frame based on the LL frame indication of the LL status notification, and requests prompt retransmission of the missing LL frame by using a timely retransmission request frame for that round of data transmission. For the missing non-LL frame, the recipient may wait and provide the feedback of the unsuccessful reception of the missing non-LL frame in the BA frame, which also triggers the retransmission of all the non-LL frames lost for this round, for example, the retransmission may occur in the next round.

According to the above embodiments, an enhanced mechanism designed to mitigate the issue of untimely feedback on the unsuccessful receipt of LL frame and failure to meet the low latency requirement for data transmission due to the untimely feedback, as well as the Head-of-Line (HOL) blocking issue in the current in-order delivery approach. The core concept of the present disclosure involves an additional LL frame indication, specifically the LL bitmap, is incorporated in, for example, a LL status notification frame, for indicating which of the data frames to be transmitted in the BA session are LL frames with strict LL requirements. This LL bitmap has multiple bits, each of the bits may serve as indicator for the corresponding data frame within the current round of data frames (MPDUs), which can be denoted by '1' for LL frame and '0' for non-LL frame.

Upon the reception of a data frame, the recipient not only delivers it to the upper layer but also evaluates the LL bitmap for checking whether there is any LL frame lost. If the recipient finds that a previous data frame prior to the currently received data frame is lost, and that the previous data frame is a LL frame, the recipient is then required to promptly convey this packet loss information back to the originator. That is, a prompt retransmission request for the missing LL frame will be transmitted from the recipient to the originator.

Furthermore, for the received data frames to be delivered to the upper layer, the recipient also performs an action to detect whether a received data frame is a replay frame, for example, based on the PN window bitmap. For example, if it is determined that the received data frame is below the range of scoreboard of the PN window bitmap, or if the received data frame is within the scoreboard but has been received before (e.g., as indicated by the value of corresponding bit of the PN window bitmap), it can be determined that the received data frame is a relay frame and should not be forwarded to the LLC layer. Otherwise, the received data frame is a newly received data frame and thus can be delivered to the LLC layer. Details for the duplicate detection for the received data frames are omitted here.

According to the above embodiment, the enhancement provides efficient solutions for the low latency related issue and also for the HOL issue in conventional BA mechanisms.

Fig. 5 shows an exemplary schematic diagram illustrating the bitmaps in the enhanced immediate BA mechanism according to an embodiment of the present disclosure.

As shown in Fig. 5, data frames designated for transmission within a BA session are labeled with Sequence Numbers (SNs) such as SN=x, ..., SN=x+6, and so forth, which may be numbered from an agreed starting sequence number, SSN. An example scenario may involve the transmission of a total of 64 data frames, or a varying number of data frames, either more or fewer.

Fig. 5 illustrates that data frames with SN=x, SN=x+2, and from SN=x+4 to SN=x+6 are identified as LL frames with stringent low latency requirements. For example, each of a plurality of bits of the LL bitmap associated with the plurality of data frames to be transmitted during the BA session has a first value (e.g., a value of 1) for identifying a corresponding data frame as a LL data frame, or a second value (e.g., a value of 0) for identifying the corresponding data frame as a non-LL data frame.

During the data transmission phase of the BA session, the recipient performs out-of-order delivery for received data frames of the plurality of data frames to an upper layer (e.g., LLC layer) and utilizes a packet number (PN) window bitmap to record the reception status of the data frames. For example, the PN window bitmap can be maintained, for example, by updating the reception status for the received data frames, such as by change the value of a particular bit corresponding to a particular data frame to reflect that the data frame is received and delivered to the upper layer. Herein, the term "Packet Number" may be used interchangeable with "PN", "Sequence Number", "SN" or the like. For example, each of a plurality of bits of the PN window bitmap associated with the plurality of data frames has a first value (e.g., a value of 1) for indicating that a corresponding data frame has been received and delivered to the upper layer, or a second value (e.g., a value of 0) for indicating that the corresponding data frame has not been received and delivered to the upper layer. As shown in Fig. 5, it is shown that data frames with SN=x+1 and SN=x+5 are not received. Since the frame SN=x+1 is a non-LL frame, the mechanism for timely transmitting retransmission request frames is not triggered. Conversely, the identification of SN=x+5 as a LL frame does activate this mechanism. In this case, the retransmission request frame indicating an index of the missing LL frame within the LL bitmap, such as the index number x+5 or simply the offset value of 5 can be indicated.

According to embodiments of the present disclosure, the missing LL frame of the one or more LL frames can be determined in various ways, based on the receipt status of the data frames, especially for the LL data frames. According to an illustrative example, the missing LL frame can be determined based on the LL bitmap and the PN window bitmap. For example, for a current received data frame of the plurality of data frames, it is first determined that a previous data frame prior to the current received data frame has not been received based on the PN window bitmap. In response to determining that the previous data frame has not been received, it is further determined whether the previous data frame is a LL frame based on the LL bitmap. Next, in response to determining that the previous data frame is a LL frame, it can be determined the previous data frame as the missing LL frame. For instance, upon receiving data frame SN=x+6 and recognizing based on the bitmaps (e.g., the LL bitmap and PN window bitmap as mentioned above) that the frame SN=x+5 has not been received and it is a LL frame (as marked in the dashed-line circle of Fig. 5), it is determined that LL frame SN=x+5 is missing, thus the recipient may initiate an immediate request for retransmission of this missing LL frame SN=x+5.

It should be noted that other ways of determining the missing LL frame are also possible, the present disclosure does not restrict how the missing LL frame is determined.

Following the retransmission of the missing LL frame, the recipient is expected to successfully receive the retransmitted SN=x+5, or at least it may significantly increase the likelihood of its successful reception. Subsequently, for each data frame received, there will be an ongoing assessment to identify any missing LL frame(s) and to trigger retransmission request frames in a timely manner, details for the ongoing determination is omitted.

It should be noted that the plurality of data frames can be transmitted by the originator to the recipient at an interval of a Short Interframe Space (SIFS). By contrast, the retransmission request frame for requesting the retransmission of the missing LL frame can be transmitted by the recipient to the originator in response to determining the missing LL frame and at an interval of Reduced Interframe Space (RIFS), which is shorter than the SIFS. For example, the retransmission request frame can be transmitted at the RIFS from the point of time at which the missing LL frame can be determined by the recipient. In this way, with the shorter time interval, the retransmission request frame can preempt the wireless transmission medium in a shorter time, thereby enabling the feedback of the missing LL frame to be promptly provided to the originator, thus facilitating the retransmission of the missing LL frame to be conducted as soon as possible.

After the completion of transmission of all the data frames in this BA session (for instance, after the total of 64 data frames have been transmitted), the recipient will feedback a BA frame that pertains to all data frames, and the BA frame has a BA bitmap indicating the reception status of each frame. For example, it is shown in Fig. 5 that the data frame SN=x+1, which is a non-LL frame, was not successfully received, and that the data frame SN=x+5, which is a LL frame, was successfully received due to the timely retransmission.

This enhanced BA mechanism ensures that the reception status of both LL and non-LL frames is communicated back to the originator, enabling the facilitation of successful reception (or enhancing the probability thereof) through the retransmission mechanism. The distinction is that LL frames, due to their strict low latency requirements, necessitate immediate feedback, whereas non-LL frames, lacking such stringent requirements, can be subject to batch feedback, thus not incurring excessive overhead in the feedback process.

Fig. 6 shows an exemplary schematic diagram illustrating the message sequence for interactions between wireless communication devices in the Delayed BA mechanism.

It should be noted that, the overall data frame exchange procedure 600 of Delayed BA mechanism of Fig. 6 is basically the same as the Immediate BA mechanism of Fig. 2, both including a setup stage (including step S601 of Fig. 6), a data transfer stage (including steps S602-S606 of Fig. 6), and a tear down stage (including steps S607-S608 of Fig. 6). Immediate BA of Fig. 2 and delayed BA of Fig. 6 differ in the handling of the BAR and BA frames during the data transfer phase. With immediate BA, the BAR solicits an immediate BA response, while with delayed BA, correct reception of the BAR frame itself (in step S603) is acknowledged with an ACK (in step S604) and the BA is returned in a separate channel access (in step S605) and acknowledged with another ACK (in step S606), details for the same operations of the frame interactions are omitted here.

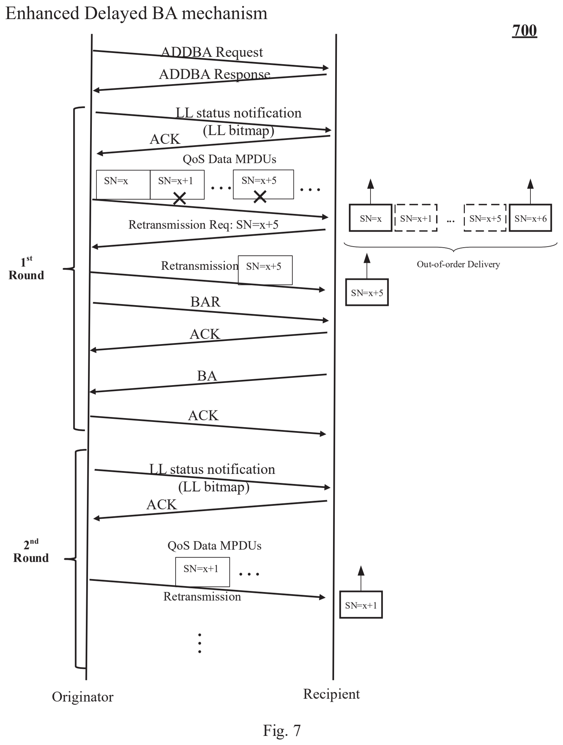

Fig. 7 shows an exemplary schematic diagram illustrating an enhanced delayed BA mechanism according to an embodiment of the present disclosure.

It should be noted that, the overall frame exchange procedure 700 of Enhanced Delayed BA mechanism of Fig. 7 is basically the same as the Enhanced Immediate BA mechanism of Fig. 4, and the key concept of the enhancements lies in adding a LL bitmap (for example, in a LL status notification frame), and out-of-order approach for the received data frames to an upper layer (e.g., LLC layer) in an efficient way. According to the enhanced mechanism, the received data will not be "blocked" by a preceding missing data frame forming a hole and thus can be delivered to LLC layer efficiently. Furthermore, a prompt feedback on missing LL frame can be timely provided to allow for prompt retransmission, without having to wait a long time for the BA bitmap for the entire BA session.

According to the above embodiment, the enhancement provides efficient solutions for the latency related issue and also for the HOL issue in conventional BA mechanisms.

It should be noted that while the aforementioned description pertains to improvements in Immediate and Delayed BA mechanisms, the enhancements of the present disclosure are not limited thereto and can be applied to various other BA mechanisms as well.

As a first additional example, the enhancements on BA mechanism can be applied to the HT-immediate and HT-delayed BA mechanisms, which differ from the immediate and delayed BA mechanisms in that they do not transmit multiple QoS data MPDUs. Instead, in the HT-immediate and HT-delayed BA mechanisms, multiple MPDUs are encapsulated into an Aggregate MPDU (A-MPDU) and transmitted within a single TXOP.

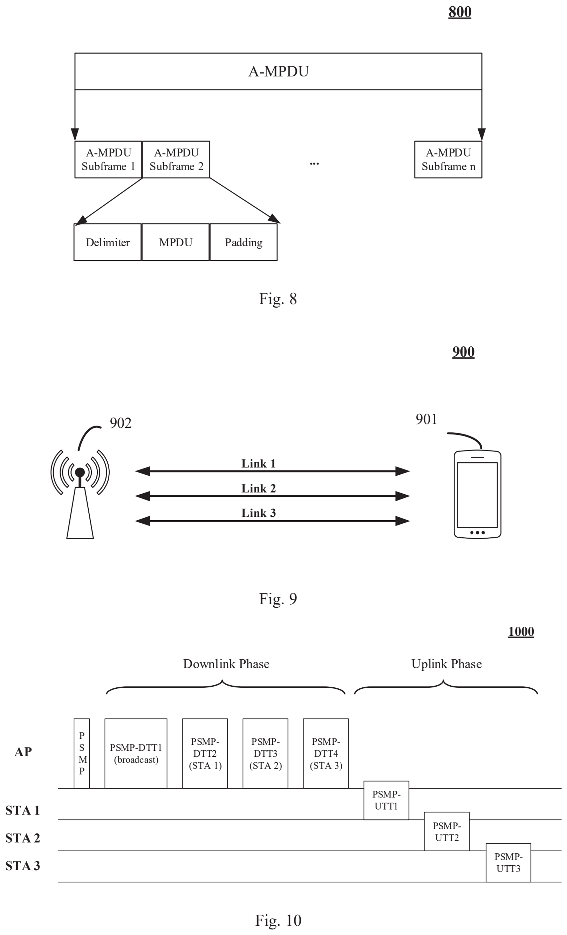

Fig. 8 shows an exemplary schematic diagram illustrating an A-MPDU used in the enhanced BA mechanism according to an embodiment of the present disclosure.

As shown in the A-MPDU encapsulation 800 of Fig. 8, with the format of A-MPDU, multiple MPDUs (also referred to as A-MPDU subframes 1-n) are aggregated. Each A-MPDU subframe consists of an MPDU Delimiter and the MPDU entity. For an A-MPDU, except for the last subframe, the other subframes will have a padding field of 0-3 bytes to make the subframe length a multiple of 4 bytes. The recipient of the A-MPDU parses the A-MPDU framing structure by using each delimiter to extract the following MPDU.

In the process of the improved BA mechanism of the present disclosure applied to the HT-immediate and HT-delayed BA mechanisms, further modification related to prompt request retransmission based on LL frame indication are as follows.

Upon successful decoding of a delimiter in an A-MPDU and the correct reception of a new MPDU corresponding to the delimiter based on the parsing of the A-MPDU framing structure, the recipient decapsulates the received MPDU into an MSDU for deliver to the LLC layer in the out-of-order approach as mentioned above. Furthermore, the recipient sets the corresponding bit of the received MPDU in the PN window bitmap to the value of 1, indicating that the MSDU has been correctly sent to the LLC layer. At the same time, it is necessary to check whether there are any unreceived data frames before the sequence number of the currently received MPDU, i.e., whether there is any zero bit(s) in the PN window bitmap before this bit. If so, the recipient compares whether the corresponding bit in the LL bitmap corresponding to the zero bit(s) of the PN window bitmap is 1. If so, it indicates that the MPDU corresponds to a LL frame and the MPDU has not been decapsulated into an MSDU for transmission to the LLC layer. In this case, prompt request for retransmitting the missing MPDU served as LL frame is transmitted. For example, the retransmission request can be sent in a reduced inter-frame interval as compared with the time interval for transmitting the MPDUs of the A-MPDU, to preempt the medium in a shorter time, such as at RIFS. Otherwise, the originator continues sending the next QoS data MPDU, if no retransmission request is received between the successive two QoS data MPDUs sent at SIFS.

Furthermore, unlike the immediate and delayed BA mechanisms where the originator actively sends a BAR after the transmission of QoS data MPDUs, and then the recipient returns a BA message, the HT-immediate and HT-delayed BA mechanisms operate such that after the recipient finishes receiving the A-MPDU within a TXOP, the originator does not send a BAR, but the recipient directly returns the BA message. Therefore, in the improvements for the immediate and delayed BA mechanisms of the present invention, there is no process of sending a BAR message during the data transfer stage.

As a second additional example, the enhancements on BA can be applied to the Multi-Link Device (MLD) BA mechanisms, which will be described hereinafter.

Fig. 9 shows an exemplary schematic diagram illustrating a pair of MLD devices supporting the BA mechanism according to an embodiment of the present disclosure.

One of the key features of Wi-Fi 7 is Multi-Link Operation (MLO). As most current APs and stations incorporate dual-band or tri-band capabilities, the MLO feature enables packet-level link aggregation in the MAC layer across different PHY links. By performing load balancing according to traffic requirements, MLO achieves significantly higher throughput and lower latency for enhanced reliability in a heavily loaded network. In the 802.11be standard, the Multi-Link Operation (MLO) technology is introduced, in which a single device, namely a Multi-Link (ML) device (MLD), implements a ML logical entity made of a plurality of stations. The stations can use 802.11 mechanisms to communicate with stations of another MLD over respective communication links, thereby establishing a multilink communication session to exchange data units (e.g., MPDUs). Therefore, one MLD can transmit messages over multiple links simultaneously to improve throughput.

With MLO capability, a Multi-Link Device (MLD), such as the client device 901 and the access point (AP) 902 of Fig. 9 can be employed in 802.11 WLAN network 900, which allows for concurrent data transmission and reception in multiple channels across multiple frequency bands, such as in Link 1 through Link 3. Examples of the Links 1-3 can be in the bands of 2.4GHz, 5GHz and 6GHz.

In the process of the improved BA mechanism of the present disclosure being applied for the MLD BA mechanism, there are multiple links being established between the originator and recipient, and the plurality of data frames of the BA session corresponding to a Traffic Identifier (TID) are transmitted over a selected one of the established multiple links, and the BA frame indicates whether each of the plurality of data frames for the BA session is successfully received over the selected one of the established multiple links.

Specifically, according to the MLD BA mechanism, data frames associated with a particular TID can be transmitted over one of the negotiated multiple links, and the link may be selected based on a scheduling algorithm, e.g., a load balancing. It should be noted that all the links share a common BA bitmap, meaning that the receive status of data frames received on an arbitrarily selected link are indicated on the common BA bitmap. Accordingly, the recipient sends a feedback message indicating, through the common BA bitmap, the reception status of the data frames received over the selected link among the negotiated multiple links during the current BA session. Since the MLD BA mechanism is fundamentally same as the immediate and delayed BA mechanisms described above, the improved process for MLD BA mechanism in the present disclosure is not described in further details.

As a third additional example, the enhancements on BA can be applied to the Power-Save Multi-Poll (PSMP) BA mechanisms, which will be described hereinafter.

Fig. 10 shows an exemplary schematic diagram illustrating Power-Save Multi-Poll (PSMP) sequence in BA mechanism according to an embodiment of the present disclosure.

Power-save multi-poll (PSMP) is a scheduling technique introduced in 802.11n to optimize channel access for devices that receive and transmit small amounts of data periodically and would like their communications interface to remain inactive most of the time to conserve power, i.e. when they are not actively transmitting or receiving frames. PSMP optimizes for power consumption by providing the downlink and uplink schedule at the start of the PSMP phase so that individual stations can shut down their receivers until needed in the downlink phase and transmit when scheduled during the uplink phase without performing CCA. A basic PSMP sequence 1000 is illustrated in Fig. 10.

As shown in Fig. 10, the PSMP sequence begins with a PSMP frame, which contains the schedule for the subsequent downlink and uplink transmissions. After receiving the PSMP frame, a station need only be awake for the PSMP downlink transmission time (PSMP-DTT) containing broadcast frames (if any), during its allotted PSMP-DTT and during its PSMP uplink transmission time (PSMP-UTT). As an example, if a downlink transmission is to be performed between AP and STA1, multiple BA sessions can be established in PSMP-DTT2 with the AP as the originator and the STA1 as recipient. As another example, if an uplink transmission is to be performed between STA1 and AP, multiple BA sessions can also be established in PSMP-UTT1 with the STA1 as the originator and the AP as recipient.

Within the PSMP mechanism, a HT immediate mechanism is employed, which is based on Multi-TID BAR and Multi-TID BA. For the Multi-TID BAR and Multi-TID BA approaches, distinct BA sessions can be instantiated for each Traffic Identifier (TID). As a result, the initiation of each BA session necessitates an exchange of ADDBA request and response frames. For each BA session, the above enhanced BA mechanism can be used in the PSMP BA mechanism. Specifically, when a Power-Save Multi-Poll (PSMP) scheduling mode is used for communications between the wireless communication device and the peer wireless communication device, and the multiple BA sessions corresponding to multiple Traffic Identifiers (TIDs) are established, for each BA session of the multiple BA sessions, the LL frame indication for one or more LL frames of the plurality of data frames for the BA session is communicated between the devices.

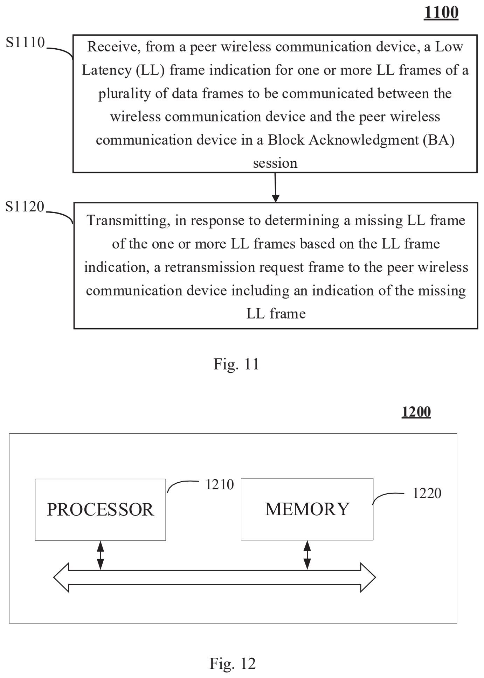

Fig. 11 shows a flowchart of a computer-implemented method of wireless communication according to an embodiment of the present disclosure.

The method may be implemented in the wireless communication device (namely, the recipient as mentioned above) and the detailed description of method 1100 can refer to the content described in the above with respect to Figs. 1-10. For example, method 1100 can be executed in the architecture described with respect to Figs. 1-10 and according to the interactions between the originator and recipient when transmitting data frames therebetween using the enhanced BA mechanism as described with respect to Figs. 1-10 (e.g., Fig.4 and Fig. 7). In addition, each step of method 1100 can be performed by one or more processing units, such as central processing unit (CPU) of the client device.

With reference to Fig. 11, method 1100 comprises steps S1110-S1120.

At step S1110, the wireless communication device (e.g., the recipient) may receive, from a peer wireless communication device (e.g., the originator), a Low Latency (LL) frame indication for one or more LL frames of a plurality of data frames to be communicated between the wireless communication device and the peer wireless communication device in a Block Acknowledgment (BA) session.

At step S1120, the wireless communication device may transmit, in response to determining a missing LL frame of the one or more LL frames based on the LL frame indication, a retransmission request frame to the peer wireless communication device including an indication of the missing LL frame.

According to an embodiment, the wireless communication device may further transmit, to the peer wireless communication device, a BA frame indicating whether each of the plurality of data frames is successfully received for the BA session.

According to an embodiment, the LL frame indication is a LL bitmap included in a LL status notification frame (as mentioned above), and each of a plurality of bits of the LL bitmap associated with the plurality of data frames has a first value for identifying a corresponding data frame as a LL data frame, or a second value for identifying the corresponding data frame as a non-LL data frame.

According to an embodiment, the wireless communication device may further perform out-of-order delivery for one or more received data frames of the plurality of data frames to an upper layer; and maintain, for the received data frames, a packet number (PN) window bitmap. Each of a plurality of bits of the PN window bitmap associated with the plurality of data frames has a first value for indicating that a corresponding data frame has been received and delivered to the upper layer, or a second value for indicating that the corresponding data frame has not been received and delivered to the upper layer.

According to an embodiment, the missing LL frame of the one or more LL frames is determined based on the LL bitmap and the PN window bitmap.

According to an embodiment, the missing LL frame of the one or more LL frames is determined based on the LL bitmap and the PN window bitmap by the following operations. For a current received data frame of the plurality of data frame, the operations include: determining that a previous data frame prior to the current received data frame has not been received based on the PN window bitmap; in response to determining that the previous data frame has not been received, determining whether the previous data frame is a LL frame based on the LL bitmap; and in response to determining that the previous data frame is a LL frame, determining the previous data frame as the missing LL frame.

According to an embodiment, the plurality of data frames are transmitted by the peer wireless communication device to the wireless communication device at an interval of a Short Interframe Space (SIFS); and the retransmission request frame is transmitted by the wireless communication device to the peer wireless communication device at an interval shorter than the SIFS after determining the missing LL frame, such as at an interval of Reduced Interframe Space (RIFS).

According to an embodiment, the plurality of data frames correspond to a plurality of MAC Protocol Data Units (MPDUs).

According to an embodiment, the plurality of MPDUs are aggregated into an Aggregate MPDU (A-MPDU).

According to an embodiment, the BA frame is transmitted by the wireless communication device in response to a BA request frame from the peer wireless communication device; or the BA frame is transmitted by the wireless communication device after receiving the data packets without the BA request frame from the peer wireless communication device.

According to an embodiment, the wireless communication device and the peer wireless communication device are established with multiple links, and the plurality of data frames of the BA session corresponding to a Traffic Identifier (TID) are transmitted over a selected one of the established multiple links, and wherein the BA frame indicates whether each of the plurality of data frames for the BA session is successfully received over the selected one of the established multiple links.

According to an embodiment, a Power-Save Multi-Poll (PSMP) scheduling mode is used for communications between the wireless communication device and the peer wireless communication device, and wherein multiple BA sessions corresponding to multiple Traffic Identifiers (TIDs) are established. For each BA session of the multiple BA sessions, the LL frame indication for one or more LL frames of the plurality of data frames for the BA session is communicated between the wireless communication device and the peer wireless communication device.

According to an embodiment, one of the wireless communication device and the peer wireless communication device is an AP, and the other is a non-AP station.

At least based on the above embodiments of the present disclosure, the enhancement provides efficient solutions for the latency related issues for LL frame transmission (and additionally for the HOL blocking issues) in conventional BA mechanisms.

Fig. 12 is an exemplary block diagram illustrating a computing device according to embodiments of the disclosure.

It should be noted that the computing device depicted in Fig. 12 can correspond to one or more of the originator, the recipient, the wireless communication device and the peer wireless communication device as described in Figs. 1-11 and can be used to perform the actions involved in the BA mechanism, for example, the method 1100 as described above.

As shown in FIG. 12, the computing device 1200 can comprise processor 1210 and memory 1220. The processor 1210 is communicatively coupled with the memory and configured to perform the methods discussed above.

Examples of the processor 1210 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The processor 1210 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 1220.

The memory 1220 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 1220 may reside in the processor 1210, external to the processor 1210, or distributed across multiple entities including the processor 1210. The memory 1220 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

In addition, according to another embodiment of the present disclosure, a computer program product for wireless communication is disclosed. As an example, the computer program product comprises a non-transitory computer readable storage medium having program instructions embodied therewith, and the program instructions are executable by a processor. When executed, the program instructions cause the processor to perform one or more of the above described procedures, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The term "determining" used in the disclosure can include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth can also be regarded as "determining". That is, regarding "determining", several actions can be regarded as "determining".

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims 'including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

## Claims

1. A wireless communication device, comprising:
one or more processors;
a memory coupled to at least one of the processors; and
a set of computer program instructions stored in the memory, which, when executed by at least one of the processors, perform actions of:
receiving, from a peer wireless communication device, a Low Latency (LL) frame indication for one or more LL frames of a plurality of data frames to be communicated between the wireless communication device and the peer wireless communication device in a Block Acknowledgment (BA) session; and
transmitting, in response to determining a missing LL frame of the one or more LL frames based on the LL frame indication, a retransmission request frame to the peer wireless communication device including an indication of the missing LL frame.

2. The wireless communication device of claim 1, wherein the set of computer program instructions stored in the memory, which, when executed by at least one of the processors, further perform actions of:
transmitting, to the peer wireless communication device, a BA frame indicating whether each of the plurality of data frames is successfully received for the BA session.

3. The wireless communication device of claim 1, wherein:
the LL frame indication is a LL bitmap included in a LL status notification frame, and
wherein each of a plurality of bits of the LL bitmap associated with the plurality of data frames has a first value for identifying a corresponding data frame as a LL data frame, or a second value for identifying the corresponding data frame as a non-LL data frame.

4. The wireless communication device of claim 3, wherein the set of computer program instructions stored in the memory, which, when executed by at least one of the processors, further perform actions of:
performing out-of-order delivery for one or more received data frames of the plurality of data frames from a current layer to an upper layer of the wireless communication device; and
for the received data frames, maintaining a packet number (PN) window bitmap,
wherein each of a plurality of bits of the PN window bitmap associated with the plurality of data frames has a first value for indicating that a corresponding data frame has been received and delivered to the upper layer, or a second value for indicating that the corresponding data frame has not been received and delivered to the upper layer.

5. The wireless communication device of claim 4, wherein the missing LL frame of the one or more LL frames is determined based on the LL bitmap and the PN window bitmap.

6. The wireless communication device of claim 5, wherein the missing LL frame of the one or more LL frames is determined based on the LL bitmap and the PN window bitmap by:
for a current received data frame of the plurality of data frames:
determining that a previous data frame prior to the current received data frame has not been received based on the PN window bitmap;
in response to determining that the previous data frame has not been received, determining whether the previous data frame is a LL frame based on the LL bitmap; and
in response to determining that the previous data frame is a LL frame, determining the previous data frame as the missing LL frame.

7. The wireless communication device of claim 1, wherein:
the plurality of data frames are transmitted by the peer wireless communication device to the wireless communication device at an interval of a Short Interframe Space (SIFS); and
the retransmission request frame is transmitted by the wireless communication device to the peer wireless communication device at an interval shorter than the SIFS after determining the missing LL frame.

8. The wireless communication device of claim 1, wherein the plurality of data frames correspond to a plurality of MAC Protocol Data Units (MPDUs).

9. The wireless communication device of claim 8, wherein the plurality of MPDUs are aggregated into an Aggregate MPDU (A-MPDU).

10. The wireless communication device of claim 1, wherein:
the BA frame is transmitted by the wireless communication device in response to a BA request frame from the peer wireless communication device; or
the BA frame is transmitted by the wireless communication device after receiving the data packets without the BA request frame from the peer wireless communication device.

11. The wireless communication device of claim 2, wherein the wireless communication device and the peer wireless communication device are established with multiple links, and
the plurality of data frames of the BA session corresponding to a Traffic Identifier (TID) are transmitted over a selected one of the established multiple links, and wherein
the BA frame indicates whether each of the plurality of data frames for the BA session is successfully received over the selected one of the established multiple links.

12. The wireless communication device of claim 2, wherein:
a Power-Save Multi-Poll (PSMP) scheduling mode is used for communications between the wireless communication device and the peer wireless communication device, and wherein multiple BA sessions corresponding to multiple Traffic Identifiers (TIDs) are established,
wherein for each BA session of the multiple BA sessions, the LL frame indication for one or more LL frames for the BA session is transmitted from the peer wireless communication device to the wireless communication device.

13. The wireless communication device of claim 1, wherein:
the wireless communication device is an Access Point (AP) and the peer wireless communication device is a non-AP station; or the wireless communication device is a non-AP station and the peer wireless communication device is an AP.

14. A method for wireless communication, the method implemented in a wireless communication device and comprising:
receiving, from a peer wireless communication device, a Low Latency (LL) frame indication for one or more LL frames of a plurality of data frames to be communicated between the wireless communication device and the peer wireless communication device in a Block Acknowledgment (BA) session; and
transmitting, in response to determining a missing LL frame of the one or more LL frames based on the LL frame indication, a retransmission request frame to the peer wireless communication device including an indication of the missing LL frame.

15. A computer program product for wireless communication, the computer program product comprising a non-transitory computer readable storage medium having program instructions embodied therewith, the program instructions executable by a processor of a wireless communication device to cause the processor to:
receive, from a peer wireless communication device, a Low Latency (LL) frame indication for one or more LL frames of a plurality of data frames to be communicated between the wireless communication device and the peer wireless communication device in a Block Acknowledgment (BA) session; and
transmit, in response to determining a missing LL frame of the one or more LL frames based on the LL frame indication, a retransmission request frame to the peer wireless communication device including an indication of the missing LL frame.
